# FASCICULE DE BREVET EUROPEEN

(11) **EP 4 442 954 B1**
(45) Date de publication et mention de la délivrance du brevet: **21.01.2026**
(21) Numéro de dépôt: 24166733.6
(22) Date de dépôt: 27.03.2024
(51) Int. Cl.: E06B 9/17, H01M 50/213, E06B 9/42

(54) **DISPOSITIF D'OCCULTATION**
VERDUNKELUNGSVORRICHTUNG
DARKENING DEVICE

(30) Priorité: 28.03.2023 FR 2302948
(43) Date de publication de la demande: 09.10.2024
(73) Titulaire: SIMU, 70100 Arc-lès-Gray (FR)
(72) Inventeur: PENEY, Clément, 70000 ECHENOZ LE SEC (FR)
(74) Mandataire: Lavoix

(56) Documents cités:
- EP-A1- 3 528 310
- EP-A1- 3 957 817
- US-A1- 2014 231 032
- US-A1- 2016 123 076

## Description

La présente invention concerne un dispositif d'occultation.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà des dispositifs d'occultation comprenant un coffre, un écran, un tube d'enroulement et un dispositif de stockage d'énergie électrique. L'écran est enroulable sur le tube d'enroulement. Le tube d'enroulement est disposé à l'intérieur du coffre. Le coffre comprend une première paroi et une deuxième paroi. La première paroi du coffre comprend une première surface intérieure. La deuxième paroi est reliée à la première paroi. La deuxième paroi du coffre comprend une deuxième surface intérieure. Le dispositif de stockage d'énergie électrique comprend une batterie et deux supports. La batterie est disposée à l'intérieur du coffre. La batterie comprend une surface extérieure. Chaque support est fixé contre la première surface intérieure de la première paroi du coffre, au moyen d'au moins un élément de fixation, et, d'autre part, maintient en position la batterie à l'intérieur du coffre. Chaque support comprend un premier bras et un deuxième bras. Le premier bras comprend une première surface. La première surface du premier bras est mise en appui contre la première surface intérieure de la première paroi du coffre. Le deuxième bras est relié au premier bras. Le deuxième bras comprend une deuxième surface. La deuxième surface du deuxième bras est mise en appui contre la surface extérieure de la batterie. La deuxième surface du deuxième bras est incurvée.

Cependant, ces dispositifs d'occultation présentent l'inconvénient que chaque support maintient la batterie en position à l'intérieur du coffre par encliquetage élastique et que chaque support est maintenu dans un état fermé au moyen d'un élastique, s'accrochant à deux crochets de chaque support, pour éviter un mouvement de translation de la batterie à l'intérieur de chacun des supports.

Ainsi, de tels supports induisent un nombre important d'opérations à réaliser par un installateur. En outre, le coût de ces supports est élevé.

Les opérations à mettre en œuvre par l'installateur lors du montage de la batterie à l'intérieur du coffre de ces dispositifs d'occultation connus sont les suivantes :
- une première opération de fixation de chaque support contre la première surface intérieure de la première paroi du coffre, au moyen d'au moins un élément de fixation, par collage, par vissage ou par rivetage,
- une deuxième opération de fixation de la batterie sur chacun des supports par encliquetage élastique,
- une troisième opération d'accroche d'un élastique sur un premier crochet de chaque support, et
- une quatrième opération de fixation de l'élastique à un deuxième crochet de chaque support.

En outre, le deuxième bras de chaque support est disposé entre la batterie et les première et deuxième surfaces intérieures des première et deuxième parois du coffre. Seul l'élastique de chaque support est disposé entre la batterie et l'écran.

Par ailleurs, la deuxième surface du deuxième bras de chaque support est orientée vers une troisième paroi du coffre, la troisième paroi étant reliée à la première paroi et, en l'occurrence, parallèle à la deuxième paroi.

On connaît également le document US 2014/0231032 A1 qui décrit un dispositif d'occultation comprenant un coffre, un écran, un tube d'enroulement et un dispositif de stockage d'énergie électrique. L'écran est enroulable sur le tube d'enroulement. Le tube d'enroulement est disposé à l'intérieur du coffre. Le coffre comprend une pluralité de parois, comprenant chacune une surface intérieure. Le dispositif de stockage d'énergie électrique comprend une batterie et un compartiment à l'intérieur duquel est logé la batterie. La batterie est disposée à l'intérieur du coffre.

D'autres dispositifs d'occultation sont connus de EP 3 528 310 A1, US 2016/0123076 A1 et EP 3 957 817 A1.

La présente invention a pour but de résoudre les inconvénients précités et de proposer un dispositif d'occultation permettant de monter une batterie à l'intérieur d'un coffre du dispositif d'occultation, tout en minimisant le nombre d'opérations à réaliser par un installateur, en minimisant le temps d'intervention de l'installateur et en minimisant le coût de l'installation du dispositif d'occultation, avec un coût faible des supports.

A cet égard, la présente invention vise un dispositif d'occultation comprenant au moins :
- un coffre,
- un écran,
- un tube d'enroulement, l'écran étant enroulable sur le tube d'enroulement, le tube d'enroulement étant disposé à l'intérieur du coffre, et
- un dispositif de stockage d'énergie électrique,

le coffre comprenant au moins :
   - une première paroi, la première paroi comprenant au moins une première surface intérieure, et
   - une deuxième paroi, la deuxième paroi étant reliée à la première paroi, la deuxième paroi comprenant au moins une deuxième surface intérieure,
le dispositif de stockage d'énergie électrique comprenant au moins :
   - une batterie, la batterie étant disposée à l'intérieur du coffre, la batterie comprenant au moins une surface extérieure, et
   - deux supports, chaque support étant fixé contre la première surface intérieure de la première paroi du coffre, au moyen d'au moins un élément de fixation, et chaque support maintenant en position la batterie à l'intérieur du coffre,
chaque support comprenant au moins :
   - un premier bras, le premier bras comprenant au moins une première surface, la première surface étant mise en appui contre la première surface intérieure de la première paroi du coffre, et
   - un deuxième bras, le deuxième bras étant relié au premier bras, le deuxième bras comprenant au moins une deuxième surface, la deuxième surface étant mise en appui contre la surface extérieure de la batterie, la deuxième surface étant incurvée.

Selon l'invention, le deuxième bras de chaque support est disposé entre la batterie et l'écran. En outre, la batterie est maintenue en appui contre la première surface intérieure de la première paroi du coffre et contre la deuxième surface intérieure de la deuxième paroi du coffre, au moyen de la deuxième surface du deuxième bras de chaque support.

Ainsi, les supports permettent de monter la batterie à l'intérieur du coffre, tout en minimisant le nombre d'opérations à réaliser par un installateur, en minimisant le temps d'intervention de l'installateur et en minimisant le coût de l'installation du dispositif d'occultation, avec un coût faible des supports.

En outre, chaque support permet de positionner la batterie au plus près de l'un des angles du coffre, formé par les première et deuxième parois reliées entre elles, de sorte à optimiser l'encombrement du dispositif de stockage d'énergie électrique à l'intérieur du coffre et à éloigner la batterie par rapport à l'écran, lors de l'enroulement ou lors du déroulement de celui-ci autour du tube d'enroulement à l'intérieur du coffre.

De cette manière, le dispositif de stockage d'énergie électrique peut être installé dans un coffre de dimensions plus faibles, en particulier en termes d'épaisseur et de hauteur.

Par conséquent, le faible encombrement du dispositif de stockage d'énergie électrique à l'intérieur du coffre permet, d'une part, d'éviter un contact de l'écran, lors de l'enroulement ou lors du déroulement de celui-ci autour du tube d'enroulement à l'intérieur du coffre, avec la batterie et, d'autre part, de maximiser un diamètre d'enroulement de l'écran autour du tube d'enroulement à l'intérieur du coffre.

Par ailleurs, chaque support permet de protéger la batterie, en évitant un contact de l'écran, lors de l'enroulement ou lors du déroulement de celui-ci autour du tube d'enroulement à l'intérieur du coffre, avec la batterie.

De cette manière, chaque support est un élément de protection de la batterie par rapport à l'écran.

Selon une caractéristique avantageuse de l'invention, la batterie est cylindrique.

Selon une autre caractéristique avantageuse de l'invention, chaque support est réalisé dans une matière plastique.

Selon une autre caractéristique avantageuse de l'invention, l'élément de fixation de chaque support contre la première paroi du coffre est un élément de fixation par collage.

Selon une autre caractéristique avantageuse de l'invention, l'élément de fixation de chaque support contre la première paroi du coffre est un élément de fixation par vissage ou par rivetage.

Selon une autre caractéristique avantageuse de l'invention, la deuxième paroi est orthogonale à la première paroi du coffre.

Selon une autre caractéristique avantageuse de l'invention, le deuxième bras de chaque support comprend, en outre, une troisième surface, la troisième surface étant opposée à la deuxième surface.

Selon une autre caractéristique avantageuse de l'invention, chaque support comprend, en outre, au moins un élément de rigidification, l'élément de rigidification reliant le premier bras au deuxième bras.

Selon une autre caractéristique avantageuse de l'invention, le dispositif d'occultation comprend, en outre, au moins un dispositif d'entraînement motorisé. Le dispositif d'entraînement motorisé comprend au moins un actionneur électromécanique. L'actionneur électromécanique comprend au moins un moteur électrique, le moteur électrique étant alimenté en énergie électrique à partir de la batterie. En outre, le tube d'enroulement est agencé de sorte à être entraîné en rotation par l'actionneur électromécanique.

Selon une autre caractéristique avantageuse de l'invention, le dispositif d'occultation comprend, en outre, au moins un panneau photovoltaïque, la batterie étant alimentée en énergie électrique au moyen du panneau photovoltaïque.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation conforme à un mode de réalisation de l'invention, l'installation comprenant un dispositif d'occultation conforme à l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique d'un dispositif d'entraînement motorisé du dispositif d'occultation de l'installation ;

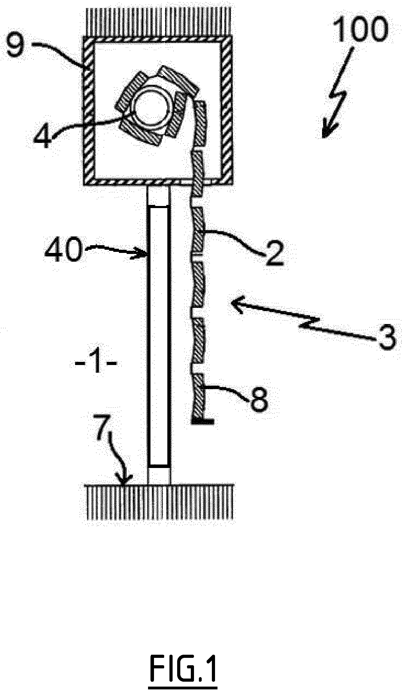

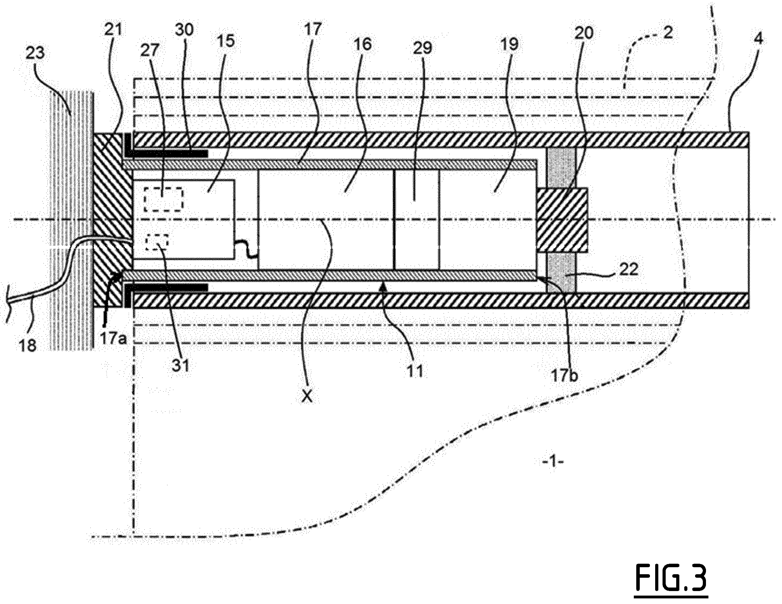

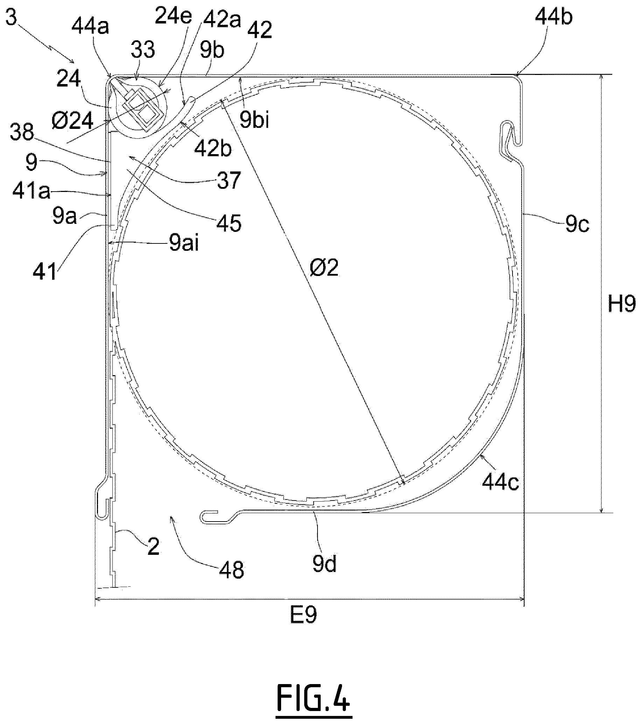

[Fig 4] la figure 4 est une vue schématique en coupe transversale, selon un plan de coupe perpendiculaire au plan de coupe de la figure 3, d'une partie de l'installation illustrée aux figures 1 à 3, montrant un coffre et un écran du dispositif d'occultation, une batterie d'un dispositif de stockage d'énergie électrique et un support de montage de la batterie contre le coffre, où l'écran est représenté de sorte à illustrer son plus grand diamètre d'enroulement autour d'un tube d'enroulement à l'intérieur du coffre, et où le tube d'enroulement et une partie de l'écran ont été omis pour faciliter la lecture de cette figure ;
[Fig 5] la figure 5 est une vue schématique en perspective de la partie de l'installation illustrée à la figure 4, montrant le montage de la batterie contre le coffre au moyen de deux supports, où l'écran a été omis et où une partie du coffre a été retirée ;
[Fig 6] la figure 6 est une vue schématique en perspective d'un des deux supports illustrés à la figure 5, selon un premier angle de vue ; et
[Fig 7] la figure 7 est une vue schématique en perspective du support de la figure 6, selon un deuxième angle de vue différent du premier angle de vue.

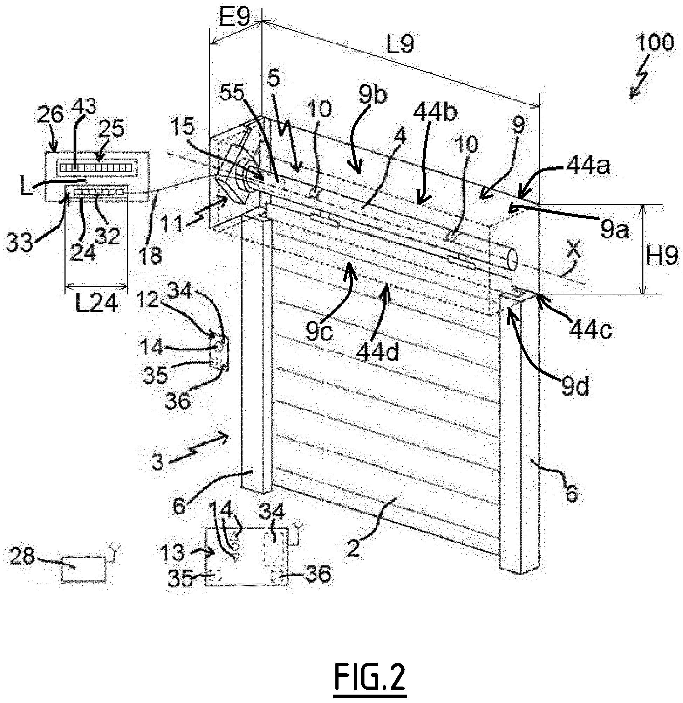

On décrit tout d'abord, en référence aux figures 1 et 2, une installation domotique 100 conforme à l'invention. Cette installation domotique 100 comprend au moins un dispositif de fermeture, d'occultation ou de protection solaire 3, conforme à un mode de réalisation l'invention. Cette installation domotique 100, installée dans un bâtiment, non représenté, comporte une ouverture 1, dans laquelle est disposée une fenêtre 40 ou une porte, qui n'est représentée qu'à la figure 1. Cette installation domotique 100 est équipée d'au moins un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille ou encore une porte. La présente invention s'applique à tous les types de dispositif d'occultation.

On décrit, en référence aux figures 1 et 2, un volet roulant conforme au mode de réalisation de l'invention.

Le dispositif d'occultation 3 comprend un dispositif d'entraînement motorisé 5. Le dispositif d'entraînement motorisé 5 comprend un actionneur électromécanique 11 illustré à la figure 3.

Le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Le dispositif d'occultation 3 comprend, en outre, un coffre 9.

Dans le cas d'un volet roulant, la position haute enroulée correspond à la mise en appui d'une lame d'extrémité finale 8, par exemple en forme de L, du tablier 2 du volet roulant 3 contre un bord du coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation domotique 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation domotique 100 et, plus particulièrement, au dispositif d'occultation 3 illustré aux figures 1 et 2.

Avantageusement, l'actionneur électromécanique 11 comprend un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité électronique de contrôle 15.

Ainsi, le deuxième module de communication 36 de l'unité de commande locale 12 ou de l'unité de commande centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 31. En variante, le capteur et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Avantageusement, le carter 17 est un tube.

Ici, le tube formant le carter 17 présente une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Le carter 17 est creux. Le carter 17 comprend une première extrémité 17a et une deuxième extrémité 17b. La deuxième extrémité 17b est opposée à la première extrémité 17a. Le carter 17 est ouvert à chacune de ses extrémités 17a, 17b.

Avantageusement, l'actionneur électromécanique 11 comprend, en outre, un arbre de sortie 20.

L'arbre de sortie 20 est disposé, autrement dit est configuré pour être disposé, au niveau de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est accouplé, autrement dit est configuré pour être accouplé, avec le moteur électrique 16, en particulier avec le rotor du moteur électrique 16 et dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Ici et comme visible à la figure 3, le frein 29 est configuré pour être disposé, autrement dit est disposé, en particulier dans la configuration assemblée de l'actionneur électromécanique 11, entre le moteur électrique 16 et le réducteur 19, c'est-à-dire à la sortie du moteur électrique 16.

En variante, non représentée, le frein 29 est configuré pour être disposé, autrement dit est disposé, en particulier dans la configuration assemblée de l'actionneur électromécanique 11, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30, pouvant également être appelée un manchon. La couronne 30 est disposée, autrement dit est configurée pour être disposée, au niveau de la première extrémité 17a du carter 17, en particulier dans la configuration assemblée de l'actionneur électromécanique 11.

La couronne 30 constitue, autrement dit est configurée pour constituer, un palier de guidage en rotation du tube d'enroulement 4, en particulier dans une configuration assemblée du dispositif d'occultation 3.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2. Le dispositif de détection d'obstacle et de fins de course peut être mécanique ou électronique.

Avantageusement, le dispositif de détection d'obstacle et de fins de course est mis en oeuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 insérée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur » ou « point fixe ».

Le support de couple 21 obture, autrement dit est configuré pour obturer, la première extrémité 17a du carter 17, en particulier dans la configuration assemblée de l'actionneur électromécanique 11.

Ainsi, le support de couple 21 est disposé, autrement dit est configuré pour être disposé, au niveau de la première extrémité 17a du carter 17.

Avantageusement, le support de couple 21 est en saillie, au niveau de la première extrémité 17a du carter 17, en particulier la première extrémité 17a du carter 17 recevant la couronne 30.

Ainsi, une première partie du support de couple 21 est disposée à l'intérieur du carter 17 et une deuxième partie du support de couple 21 est disposée à l'extérieur du carter 17.

Avantageusement, le support de couple 21 de l'actionneur électromécanique 11 est configuré pour fixer l'actionneur électromécanique 11 sur un bâti 23, en particulier à une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Le support de couple 21 est fixé, autrement dit est configuré pour être fixé, au carter 17 au moyen d'un ou plusieurs éléments de fixation, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison 22 est, par exemple, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Avantageusement, le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'occultation 3 et, plus particulièrement, le dispositif d'alimentation en énergie électrique 26 comprend au moins un dispositif de stockage d'énergie électrique 33.

Le dispositif de stockage d'énergie électrique 33 comprend au moins une batterie 24.

Avantageusement, le dispositif d'occultation 3 et, plus particulièrement, le dispositif d'alimentation en énergie électrique 26 comprend, en outre, au moins un panneau photovoltaïque 25.

Dans ce cas, la batterie 24 est de type rechargeable.

Le dispositif d'alimentation en énergie électrique 26 et, plus particulièrement, la batterie 24 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 et, plus particulièrement, la batterie 24 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24, par une liaison électrique L.

L'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en oeuvre par énergie solaire, au moyen du panneau photovoltaïque 25.

La batterie 24 est disposée à l'intérieur du coffre 9.

A la figure 2, la batterie 24 est représentée à l'extérieur du coffre 9 afin de mieux visualiser les composants du dispositif d'alimentation en énergie électrique 26. Ceci est indépendant de la localisation de la batterie 24 à l'intérieur du coffre 9.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici, la batterie 24 est reliée électriquement directement à l'unité électronique de contrôle 15, par le câble d'alimentation électrique 18.

Avantageusement, la batterie 24 comprend une pluralité d'éléments de stockage d'énergie 32, en particulier reliés électriquement en série. Les éléments de stockage d'énergie 32 de la batterie 24 peuvent être, notamment des accumulateurs ou des piles.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les organes 15, 24 et 25 à travers une liaison filaire, qui peut être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante, en complément, le dispositif d'entraînement motorisé 5, en particulier l'actionneur électromécanique 11, est alimenté en énergie électrique à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, l'unité électronique de contrôle 15 comprend une seule carte électronique 55. En outre, la carte électronique 55 est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique 55.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique. Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

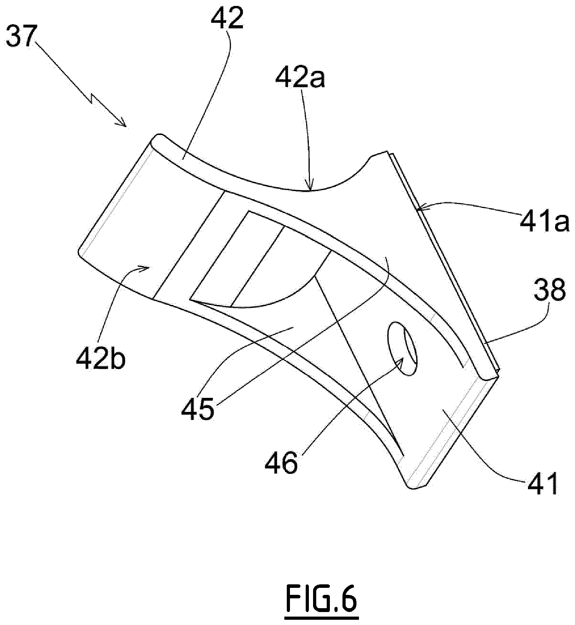

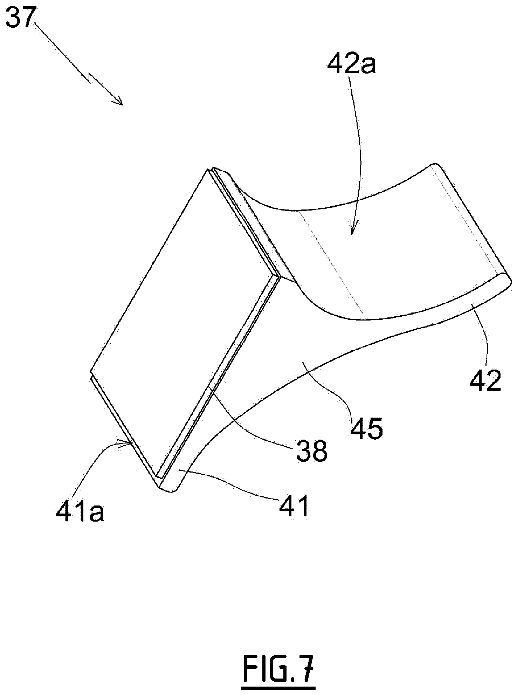

On décrit à présent, plus en détail et en référence aux figures 4 à 7, le dispositif de stockage d'énergie électrique 33 appartenant au dispositif d'occultation 3 illustré aux figures 1 et 2, ainsi que le montage de la batterie 24 contre le coffre 9.

Le coffre 9 comprend au moins une première paroi 9a et une deuxième paroi 9b. La deuxième paroi 9b est reliée, autrement dit est configurée pour être reliée, à la première paroi 9a, en particulier dans la configuration assemblée du dispositif d'occultation 3. La première paroi 9a comprend au moins une première surface intérieure 9ai. En outre, la deuxième paroi 9b comprend au moins une deuxième surface intérieure 9bi.

Les première et deuxième parois 9a, 9b du coffre 9 sont reliées entre elles soit par des éléments de fixation, non représentés, pouvant être, par exemple, des éléments de fixation par emboîtement, par encliquetage élastique, par rivetage ou par vissage, soit parce qu'elles appartiennent à une même bande de tôle ou forment une pièce unique, notamment en matière plastique.

Avantageusement, le coffre 9 est défini par une longueur L9, une hauteur H9 et une épaisseur E9, autrement dit une profondeur.

La batterie 24 comprend au moins une surface extérieure 24e.

Le dispositif de stockage d'énergie électrique 33 comprend, en outre, au moins deux supports 37. Chaque support 37 est fixé contre la première surface intérieure 9ai de la première paroi 9a du coffre 9, au moyen d'au moins un élément de fixation 38. En outre, chaque support 37 maintient en position la batterie 24 à l'intérieur du coffre 9.

Ici, les deux supports 37 sont identiques. La description suivante d'un support s'applique à l'un ou l'autre de ces deux supports 37.

Chaque support 37 comprend au moins un premier bras 41 et un deuxième bras 42. Le premier bras 41 comprend au moins une première surface 41a. La première surface 41a est configurée pour être mise en appui, autrement dit est mise en appui, contre la première surface intérieure 9ai de la première paroi 9a du coffre 9, en particulier dans la configuration assemblée du dispositif d'occultation 3. Le deuxième bras 42 est relié au premier bras 41. Le deuxième bras 42 comprend au moins une deuxième surface 42a. La deuxième surface 42a est configurée pour être mise en appui, autrement dit est mise en appui, contre la surface extérieure 24e de la batterie 24, en particulier dans la configuration assemblée du dispositif d'occultation 3. En outre, la deuxième surface 42a est incurvée, autrement dit présente une concavité.

Ici, la concavité de la deuxième surface 42a est orientée vers la batterie 24, en particulier dans la configuration assemblée du dispositif d'occultation 3.

Le deuxième bras 42 de chaque support 37 est disposé, autrement dit est configuré pour être disposé, entre la batterie 24 et l'écran 2, en particulier dans la configuration assemblée du dispositif d'occultation 3.

En outre, la batterie 24 est maintenue en appui, autrement dit est configurée pour être maintenue en appui, contre la première surface intérieure 9ai de la première paroi 9a du coffre 9 et contre la deuxième surface intérieure 9bi de la deuxième paroi 9b du coffre 9, au moyen de la deuxième surface 42a du deuxième bras 42 de chaque support 37, en particulier dans la configuration assemblée du dispositif d'occultation 3.

Ainsi, les supports 37 permettent de monter la batterie 24 à l'intérieur du coffre 9, tout en minimisant le nombre d'opérations à réaliser par un installateur, en minimisant le temps d'intervention de l'installateur et en minimisant le coût de l'installation du dispositif d'occultation 3, avec un coût faible des supports 37.

Les première et deuxième parois 9a, 9b du coffre 9 reliées entre elles forment un des angles 44a, 44b, 44c, 44d du coffre 9.

Avantageusement, le coffre 9 présente une ouverture 48 pour le passage de l'écran 2 lors de l'enroulement et lors du déroulement de ce dernier autour du tube d'enroulement 4, comme illustré à la figure 4.

Avantageusement, le coffre 9 comprend une troisième paroi 9c et une quatrième paroi 9d.

Ici et comme illustré à la figure 2, le coffre 9 est de forme parallélépipédique et présente quatre angles 44a, 44b, 44c, 44d, dont un angle supérieur droit 44a, un angle supérieur gauche 44b, un angle inférieur droit 44c et un angle inférieur gauche 44d.

En variante et comme illustré à la figure 4, le coffre 9 est de forme parallélépipédique et présente trois angles 44a, 44b, 44c, dont un angle supérieur gauche 44a, un angle supérieur droit 44b et un angle inférieur droit 44c. L'angle inférieur droit 44c présente un rayon de courbure élevé pour relier les troisième et quatrième parois 9c, 9d du coffre 9. Dans ce cas, le coffre 9 est dépourvu d'un angle inférieur gauche 44d, étant donné que la première paroi 9a et la quatrième paroi 9d ne sont pas jointives, de sorte à former l'ouverture 48.

En outre, chaque support 37 permet de positionner la batterie 24 au plus près de l'un des angles 44a, 44b, 44c, 44d du coffre 9, formé par les première et deuxième parois 9a, 9b reliées entre elles, de sorte à optimiser l'encombrement du dispositif de stockage d'énergie électrique 33 à l'intérieur du coffre 9 et à éloigner la batterie 24 par rapport à l'écran 2, lors de l'enroulement ou lors du déroulement de celui-ci autour du tube d'enroulement 4 à l'intérieur du coffre 9.

De cette manière, le dispositif de stockage d'énergie électrique 33 peut être installé dans un coffre 9 de dimensions plus faibles, en particulier en termes d'épaisseur E9 et de hauteur H9.

Par conséquent, le faible encombrement du dispositif de stockage d'énergie électrique 33 à l'intérieur du coffre 9 permet, d'une part, d'éviter un contact de l'écran 2, lors de l'enroulement ou lors du déroulement de celui-ci autour du tube d'enroulement 4 à l'intérieur du coffre 9, avec la batterie 24 et, d'autre part, de maximiser un diamètre d'enroulement Ø2 de l'écran 2 autour du tube d'enroulement à l'intérieur du coffre 9. Un cercle de diamètre Ø2, qui délimite l'encombrement maximum de l'écran 2 à l'intérieur du coffre 9, est représenté par un trait en pointillés à la figure 4.

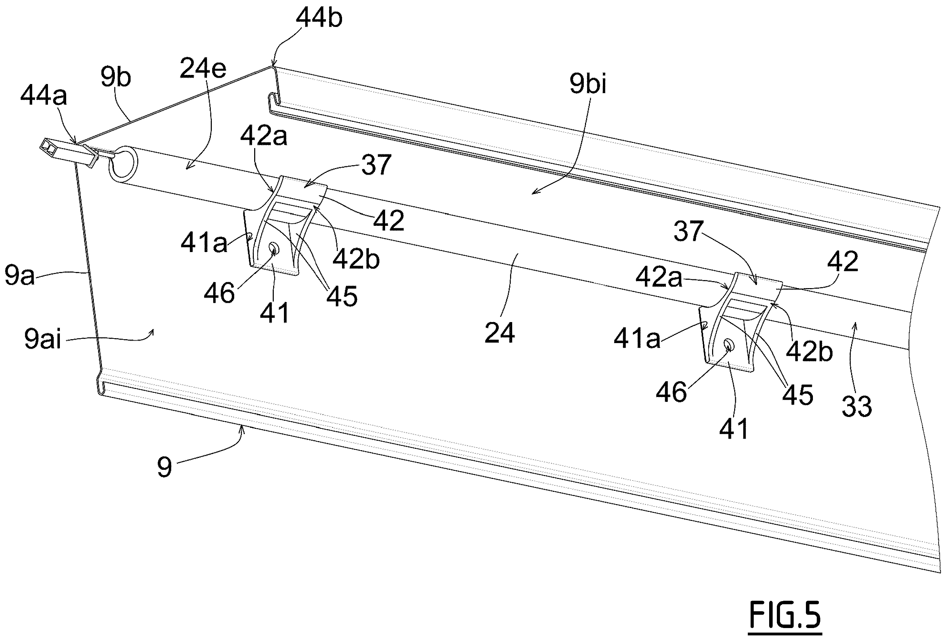

Dans l'exemple de réalisation illustré aux figures 4 et 5, chaque support 37 permet de positionner la batterie 24 au plus près de l'angle 44a du coffre 9.

En variante, non représentée, chaque support 37 permet de positionner la batterie 24 au plus près de l'angle 44b, de l'angle 44c ou de l'angle 44d du coffre 9.

Par ailleurs, chaque support 37 permet de protéger la batterie 24, en évitant un contact de l'écran 2, lors de l'enroulement ou lors du déroulement de celui-ci autour du tube d'enroulement 4 à l'intérieur du coffre 9, avec la batterie 24.

De cette manière, chaque support 37 est un élément de protection de la batterie 24 par rapport à l'écran 2.

Avantageusement, chaque support 37 est réalisé dans une matière plastique.

Ainsi, chaque support 37 réalisé en matière plastique permet d'éviter d'abîmer la batterie 24, lors de l'installation de celle-ci à l'intérieur du coffre 9, au moyen des supports 37, en particulier en comparaison à des supports réalisés en métal, qui pourraient présenter des arêtes vives.

En outre, en cas de blessure de la batterie 24, lors de l'installation de celle-ci à l'intérieur du coffre 9, chaque support 37 réalisé en matière plastique permet d'éviter de créer un court-circuit dans la batterie 24, qui risquerait de générer une réaction chimique au niveau de ses éléments de stockage d'énergie électrique 32, puisque chaque support 37 n'est pas conducteur du point de vue électrique.

Avantageusement, la batterie 24 est cylindrique, autrement dit présente une section circulaire.

Ici, la batterie 24 est définie par un diamètre extérieur Ø24, qui est le diamètre extérieur de sa surface extérieure 24e.

Avantageusement, le diamètre extérieur Ø24 de la batterie 24 est compris dans une plage de valeurs prédéterminée, la plage de valeurs prédéterminée étant définie entre une première valeur minimale et une deuxième valeur maximale.

Ainsi, chaque support 37 est compatible avec différentes valeurs de diamètre extérieur Ø24 de la batterie 24, de sorte à être universel dans la plage de valeurs prédéterminée.

De cette manière, une seule référence de support 37 est développée et commercialisée pour les différentes références de batterie 24 développées et commercialisées destinées à être installées dans le coffre 9.

Avantageusement, la première valeur minimale de la plage est supérieure ou égale à dix millimètres, préférentiellement supérieure ou égale à treize millimètres, et la deuxième valeur maximale de la plage est inférieure ou égale à cinquante millimètres, préférentiellement inférieure ou égale quarante millimètres.

A titre d'exemple nullement limitatif, la valeur du diamètre extérieur Ø24 de la batterie 24 peut être de dix-sept millimètres ou de vingt-trois millimètres.

Ici et comme illustré à la figure 5, le dispositif de stockage d'énergie électrique 33 comprend deux supports 37.

En variante, non représentée, le dispositif de stockage d'énergie électrique 33 comprend trois supports 37 ou plus, notamment en fonction d'une longueur L24 de la batterie 24.

Ainsi, les supports 37, au nombre de deux ou plus, permettent de garantir un alignement de la batterie 24 à l'intérieur du coffre 9 et, plus particulièrement, au plus proche de l'un des angles 44a, 44b, 44c, 44d du coffre 9.

Avantageusement, la longueur L9 du coffre 9 est supérieure ou égale à cent vingt-cinq millimètres, notamment lorsque la valeur du diamètre extérieur Ø24 de la batterie 24 est de l'ordre de dix-sept millimètres.

Avantageusement, la deuxième surface 42a du deuxième bras 42 de chaque support 37 est orientée, autrement dit est configurée pour être orientée, d'une part, vers la deuxième paroi 9b du coffre 9 et, d'autre part, vers la première paroi 9a du coffre 9, en particulier dans la configuration assemblée du dispositif d'occultation 3.

Ici, les première et deuxième parois 9a, 9b du coffre 9 sont contigües, autrement dit adjacentes, de sorte à former l'un des angles 44a, 44b, 44c, 44d du coffre 9.

Avantageusement, la deuxième paroi 9b du coffre 9 est orthogonale à la première paroi 9a du coffre 9.

Ainsi, l'angle 44a formé par les première et deuxième parois 9a, 9b du coffre 9 est un angle droit, autrement dit à 90°.

En variante, non représentée, l'angle 44a formé par les première et deuxième parois 9a, 9b du coffre 9 peut être un angle présentant une valeur supérieure ou inférieure à 90°, par exemple de l'ordre de 100° ou de l'ordre de 80°.

Avantageusement, la courbure de la deuxième surface 42a du deuxième bras 42 de chaque support 37 est définie de sorte à être coïncidente, autrement dit de sorte à être en contact ponctuel, avec une partie de la surface extérieure 24e de la batterie 24, quelle que soit la valeur du diamètre extérieur Ø24 de la batterie 24 compris dans la plage de valeurs prédéterminée.

Ainsi, la courbure de la deuxième surface 42a du deuxième bras 42 de chaque support 37 permet de garantir un calage de la batterie 24 contre la première surface intérieure 9ai de la première paroi 9a du coffre 9 et contre la deuxième surface intérieure 9bi de la deuxième paroi 9b du coffre 9, quelle que soit la valeur du diamètre extérieur Ø24 de la batterie 24 compris dans la plage de valeurs prédéterminée, en particulier dans la configuration assemblée du dispositif d'occultation 3.

Avantageusement, le deuxième bras 42 de chaque support 37 comprend, en outre, une troisième surface 42b. La troisième surface 42b est opposée à la deuxième surface 42a.

Autrement dit, dans la configuration assemblée du dispositif d'occultation 3, la troisième surface 42b est orientée face au tube d'enroulement 4 et, éventuellement, à la portion de l'écran 2 enroulée sur ce tube d'enroulement 4.

Ainsi, la troisième surface 42b du deuxième bras 42 de chaque support 37 permet de protéger la batterie 24, en évitant un contact de l'écran 2 avec la batterie 24, lors de l'enroulement ou lors du déroulement de celui-ci autour du tube d'enroulement 4 à l'intérieur du coffre 9.

De cette manière, la troisième surface 42b du deuxième bras 42 de chaque support 37 est une face de protection de la batterie 24 par rapport à l'écran 2.

Avantageusement, chaque support 37 comprend, en outre, au moins un élément de rigidification 45. En outre, l'élément de rigidification 45 relie le premier bras 41 au deuxième bras 42.

Ici, chaque support 37 comprend deux éléments de rigidification 45.

Avantageusement, chaque élément de rigidification 45 est réalisé sous la forme d'une nervure.

Ici, les premier et deuxième bras 41, 42 et les deux éléments de rigidification 45 de chaque support 37 ne forment qu'une seule pièce. Autrement dit, chaque support 37 est une pièce monobloc constituée des premier et deuxième bras 41, 42 et des deux éléments de rigidification 45.

En variante, non représentée, les premier et deuxième bras 41, 42 et les deux éléments de rigidification 45 de chaque support 37 sont des pièces distinctes assemblées entre elles au moyen d'au moins un élément de fixation, pouvant être, par exemple, par encliquetage élastique, par emboîtement ou par vissage.

Avantageusement, l'élément de fixation 38 de chaque support 37 contre la première paroi 9a du coffre 9 est un élément de fixation par collage.

Ainsi, dans ce cas, la fixation de chaque support 37 contre la première paroi 9a du coffre 9 ne nécessite aucun outil.

En variante ou en complément, l'élément de fixation de chaque support 37 contre la première paroi 9a du coffre 9 est un élément de fixation par vissage ou par rivetage.

Avantageusement, dans le cas où la fixation de chaque support 37 contre la première paroi 9a du coffre 9 est mise en oeuvre par vissage ou par rivetage, le premier bras 41 de chaque support 37 comprend un trou de passage 46.

Ainsi, le trou de passage 46 permet le passage d'une vis ou d'un rivet au travers du premier bras 41 de chaque support 37, de sorte à visser ou à riveter chaque support 37 contre la première paroi 9a du coffre 9.

Avantageusement, dans le cas où la fixation de chaque support 37 contre la première paroi 9a du coffre 9 est mise en œuvre par vissage ou par rivetage, la première paroi 9a du coffre 9 comprend un trou de vissage ou de rivetage, non représenté.

Ici, chaque support 37 peut être fixé contre la première paroi 9a du coffre 9 soit au moyen de l'élément de fixation 38 par collage, soit au moyen de l'élément de fixation par vissage ou par rivetage, soit au moyen de l'élément de fixation 38 par collage et de l'élément de fixation par vissage ou par rivetage.

Ici, l'élément de fixation 38 par collage est un adhésif, en particulier un adhésif double face.

Dans le cas où l'élément de fixation 38 par collage est un adhésif, celui-ci présente un opercule, non représenté, qui est à retirer lors de la mise en appui de la première surface 41a du premier bras 41 de l'un des supports 37 contre la surface intérieure 9ai de la première paroi 9a du coffre 9. Suite au retrait de l'opercule, la deuxième surface 42a du deuxième bras 42 du support 37 est positionnée contre la surface extérieure 24e de la batterie 24 puis la première surface 41a du premier bras 41 du support 37 est plaquée contre la surface intérieure 9ai de la première paroi 9a du coffre 9.

Dans le cas où la fixation de chaque support 37 contre la première paroi 9a du coffre 9 est mise en oeuvre, d'une part, par collage, au moyen d'un adhésif, et, d'autre part, par vissage ou par rivetage, l'adhésif est percé préalablement au moyen d'un outil ou lors de l'insertion de la vis ou du rivet, au travers du trou de passage 46 du premier bras 41 du support 37.

Dans le cas où la fixation de chaque support 37 contre la première paroi 9a du coffre 9 peut être mise en oeuvre soit par collage, soit par vissage, soit par rivetage, un installateur a le choix entre les trois possibilités.

Avantageusement, la batterie 24 est maintenue en position, autrement dit est configurée pour être maintenue en position, à l'intérieur du coffre 9, au moyen des supports 37, dans une position horizontale, autrement dit dans une position s'étendant suivant la longueur L9 du coffre 9, en particulier dans la configuration assemblée du dispositif d'occultation 3.

Ici, la position horizontale de la batterie 24 s'entend comme étant parallèle au sol et à l'axe de rotation X.

Le montage de la batterie 24 à l'intérieur du coffre 9 de ce dispositif d'occultation 3 est mis en oeuvre en fixant chaque support 37 contre la première surface intérieure 9ai de la première paroi 9a du coffre 9, au moyen d'au moins un élément de fixation 38, par collage et/ou par vissage ou rivetage, et, dans un même temps, en positionnant la surface extérieure 24e de la batterie 24, d'une part, contre la deuxième surface 42a du deuxième bras 42 de chaque support 37 et, d'autre part, contre la première surface intérieure 9ai de la première paroi 9a et la deuxième surface intérieure 9bi de la deuxième paroi 9b du coffre 9.

Grâce à la présente invention, les supports permettent de monter la batterie à l'intérieur du coffre, tout en minimisant le nombre d'opérations à réaliser par un installateur, en minimisant le temps d'intervention de l'installateur et en minimisant le coût de l'installation du dispositif d'occultation, avec un coût faible des supports.

En outre, chaque support permet de positionner la batterie au plus près de l'un des angles du coffre, formé par les première et deuxième parois reliées entre elles, de sorte à optimiser l'encombrement du dispositif de stockage d'énergie électrique à l'intérieur du coffre et à éloigner la batterie par rapport à l'écran, lors de l'enroulement ou lors du déroulement de celui-ci autour du tube d'enroulement à l'intérieur du coffre.

De nombreuses modifications peuvent être apportées aux exemples de réalisation décrits précédemment, sans sortir du cadre de l'invention défini par les revendications.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, le dispositif d'alimentation en énergie électrique 26 comprend, en outre, une batterie auxiliaire, la batterie auxiliaire étant configurée pour recharger la batterie 24. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable. Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'occultation (3) comprenant au moins :
- un coffre (9),
- un écran (2),
- un tube d'enroulement (4), l'écran (2) étant enroulable sur le tube d'enroulement (4), le tube d'enroulement (4) étant disposé à l'intérieur du coffre (9), et
- un dispositif de stockage d'énergie électrique (33),
le coffre (9) comprenant au moins :
- une première paroi (9a), la première paroi (9a) comprenant au moins une première surface intérieure (9ai), et
- une deuxième paroi (9b), la deuxième paroi (9b) étant reliée à la première paroi (9a), la deuxième paroi (9b) comprenant au moins une deuxième surface intérieure (9bi),
le dispositif de stockage d'énergie électrique (33) comprenant au moins :
- une batterie (24), la batterie (24) étant disposée à l'intérieur du coffre (9), la batterie (24) comprenant au moins une surface extérieure (24e), et
- deux supports (37), chaque support (37) étant fixé contre la première surface intérieure (9ai) de la première paroi (9a) du coffre (9), au moyen d'au moins un élément de fixation (38), et chaque support (37) maintenant en position la batterie (24) à l'intérieur du coffre (9),
chaque support (37) comprenant au moins :
- un premier bras (41), le premier bras (41) comprenant au moins une première surface (41a), la première surface (41a) étant mise en appui contre la première surface intérieure (9ai) de la première paroi (9a) du coffre (9), et
- un deuxième bras (42), le deuxième bras (42) étant relié au premier bras (41), le deuxième bras (42) comprenant au moins une deuxième surface (42a), la deuxième surface (42a) étant mise en appui contre la surface extérieure (24e) de la batterie (24), la deuxième surface (42a) étant incurvée,
**caractérisé**
**en ce que** le deuxième bras (42) de chaque support (37) est disposé entre la batterie (24) et l'écran (2),
et **en ce que** la batterie (24) est maintenue en appui contre la première surface intérieure (9ai) de la première paroi (9a) du coffre (9) et contre la deuxième surface intérieure (9bi) de la deuxième paroi (9b) du coffre (9), au moyen de la deuxième surface (42a) du deuxième bras (42) de chaque support (37).

2. Dispositif d'occultation (3) selon la revendication 1, **caractérisé en ce que** la batterie (24) est cylindrique.

3. Dispositif d'occultation (3) selon la revendication 1 ou selon la revendication 2, **caractérisé en ce que** chaque support (37) est réalisé dans une matière plastique.

4. Dispositif d'occultation (3) selon l'une quelconque des revendications 1 à 3, **caractérisé en ce que** l'élément de fixation (38) de chaque support (37) contre la première paroi (9a) du coffre (9) est un élément de fixation par collage.

5. Dispositif d'occultation (3) selon l'une quelconque des revendications 1 à 4, **caractérisé en ce que** l'élément de fixation de chaque support (37) contre la première paroi (9a) du coffre (9) est un élément de fixation par vissage ou par rivetage.

6. Dispositif d'occultation (3) selon l'une quelconque des revendications 1 à 5, **caractérisé en ce que** la deuxième paroi (9b) est orthogonale à la première paroi (9a) du coffre (9).

7. Dispositif d'occultation (3) selon l'une quelconque des revendications 1 à 6, **caractérisé en ce que** le deuxième bras (42) de chaque support (37) comprend, en outre, une troisième surface (42b), la troisième surface (42b) étant opposée à la deuxième surface (42a).

8. Dispositif d'occultation (3) selon l'une quelconque des revendications 1 à 7, **caractérisé en ce que** chaque support (37) comprend, en outre, au moins un élément de rigidification (45), l'élément de rigidification (45) reliant le premier bras (41) au deuxième bras (42).

9. Dispositif d'occultation (3) selon l'une quelconque des revendications 1 à 8, **caractérisé en ce que** le dispositif d'occultation (3) comprend, en outre, au moins un dispositif d'entraînement motorisé (5),
**en ce que** le dispositif d'entraînement motorisé (5) comprend au moins un actionneur électromécanique (11),
**en ce que** l'actionneur électromécanique (11) comprend au moins un moteur électrique (16), le moteur électrique (16) étant alimenté en énergie électrique à partir de la batterie (24),
et **en ce que** le tube d'enroulement (4) est agencé de sorte à être entraîné en rotation par l'actionneur électromécanique (11).

10. Dispositif d'occultation (3) selon l'une quelconque des revendications 1 à 9, **caractérisé en ce que** le dispositif d'occultation (3) comprend, en outre, au moins un panneau photovoltaïque (25), la batterie (24) étant alimentée en énergie électrique au moyen du panneau photovoltaïque (25).

## Patentansprüche

1. Abdeckvorrichtung (3), mindestens umfassend:
- einen Kasten (9),
- einen Schirm (2),
- ein Wickelrohr (4), wobei der Schirm (2) auf das Wickelrohr (4) aufrollbar ist, wobei das Wickelrohr (4) im Inneren des Kastens (9) angeordnet ist, und
- eine Speichervorrichtung elektrischer Energie (33),
wobei der Kasten (9) mindestens Folgendes umfasst:
- eine erste Wand (9a), die erste Wand (9a) umfassend mindestens eine erste Innenfläche (9ai), und
- eine zweite Wand (9b), wobei die zweite Wand (9b) mit der ersten Wand (9a) verbunden ist, die zweite Wand (9b) umfassend mindestens eine zweite Innenfläche (9bi),
die Speichervorrichtung elektrischer Energie (33) mindestens umfassend:
- eine Batterie (24), wobei die Batterie (24) im Inneren des Kastens (9) angeordnet ist und die Batterie (24) mindestens eine Außenfläche (24e) umfasst, und
- zwei Halterungen (37), wobei jede Halterung (37) mittels mindestens eines Befestigungselements (38) an der ersten Innenfläche (9ai) der ersten Wand (9a) des Kastens (9) befestigt ist und jede Halterung (37) die Batterie (24) innerhalb des Kastens (9) in Position hält,
jede Halterung (37) mindestens umfassend:
- einen ersten Arm (41), wobei der erste Arm (41) mindestens eine erste Oberfläche (41a) umfasst, wobei die erste Oberfläche (41a) gegen die erste innere Oberfläche (9ai) der ersten Wand (9a) des Kastens (9) gedrückt wird, und
- einen zweiten Arm (42), wobei der zweite Arm (42) mit dem ersten Arm (41) verbunden ist, wobei der zweite Arm (42) mindestens eine zweite Oberfläche (42a) aufweist, wobei die zweite Oberfläche (42a) gegen die äußere Oberfläche (24e) der Batterie (24) gedrückt wird, wobei die zweite Oberfläche (42a) gekrümmt ist,
**dadurch gekennzeichnet,**
**dass** der zweite Arm (42) von jeder Halterung (37) zwischen der Batterie (24) und dem Schirm (2) angeordnet ist,
und **dass** die Batterie (24) gegen die erste innere Oberfläche (9ai) der ersten Wand (9a) des Kastens (9) und gegen die zweite innere Oberfläche (9bi) der zweiten Wand (9b) des Kastens (9) mittels der zweiten Oberfläche (42a) des zweiten Arms (42) von jeder Halterung (37) in Anlage gehalten wird.

2. Abdeckvorrichtung (3) nach Anspruch 1, **dadurch gekennzeichnet, dass** die Batterie (24) zylindrisch ist.

3. Abdeckvorrichtung (3) nach Anspruch 1 oder nach Anspruch 2, **dadurch gekennzeichnet, dass** jede Halterung (37) aus einem Kunststoffmaterial gefertigt ist.

4. Abdeckvorrichtung (3) nach einem der Ansprüche 1 bis 3, **dadurch gekennzeichnet, dass** das Befestigungselement (38) von jeder Halterung (37) an der ersten Wand (9a) des Kastens (9) ein Befestigungselement durch Kleben ist.

5. Abdeckvorrichtung (3) nach einem der Ansprüche 1 bis 4, **dadurch gekennzeichnet, dass** das Befestigungselement jeder Halterung (37) an der ersten Wand (9a) des Kastens (9) ein Befestigungselement durch Verschrauben oder Vernieten ist.

6. Abdeckvorrichtung (3) nach einem der Ansprüche 1 bis 5, **dadurch gekennzeichnet, dass** die zweite Wand (9b) orthogonal zu der ersten Wand (9a) des Kastens (9) ist.

7. Abdeckvorrichtung (3) nach einem der Ansprüche 1 bis 6, **dadurch gekennzeichnet, dass** der zweite Arm (42) von jeder Halterung (37) zusätzlich eine dritte Oberfläche (42b) umfasst, wobei die dritte Oberfläche (42b) gegenüber der zweiten Oberfläche (42a) ist.

8. Abdeckvorrichtung (3) nach einem der Ansprüche 1 bis 7, **dadurch gekennzeichnet, dass** jede Halterung (37) zusätzlich mindestens ein Versteifungselement (45) umfasst, wobei das Versteifungselement (45) den ersten Arm (41) mit dem zweiten Arm (42) verbindet.

9. Abdeckvorrichtung (3) nach einem der Ansprüche 1 bis 8, **dadurch gekennzeichnet, dass** die Abdeckvorrichtung (3) zusätzlich mindestens eine motorisierte Antriebsvorrichtung (5) umfasst,
dass die motorisierte Antriebsvorrichtung (5) mindestens einen elektromechanischen Aktuator (11) umfasst,
dass der elektromechanische Aktuator (11) mindestens einen Elektromotor (16) umfasst, wobei der Elektromotor (16) von der Batterie (24) mit elektrischer Energie versorgt wird,
wobei das Wickelrohr (4) angeordnet ist, um durch den elektromechanischen Aktuator (11) in Drehung versetzt zu werden.

10. Abdeckvorrichtung (3) nach einem der Ansprüche 1 bis 9, **dadurch gekennzeichnet, dass** die Abdeckvorrichtung (3) zusätzlich mindestens ein Solarpanel (25) umfasst, wobei die Batterie (24) mittels des Solarpanels (25) mit elektrischer Energie versorgt wird.

## Claims

1. A screening device (3) comprising at least:
- a box (9),
- a screen (2),
- a winding tube (4), the screen (2) being windable on the winding tube (4), the winding tube (4) being arranged inside the box (9), and
- an electrical energy storage device (33),
the box (9) comprising at least:
- a first wall (9a), the first wall (9a) comprising at least a first inner surface (9ai), and
- a second wall (9b), the second wall (9b) being connected to the first wall (9a), the second wall (9b) comprising at least a second inner surface (9bi),
the electrical energy storage device (33) comprising at least:
- a battery (24), the battery (24) being arranged inside the box (9), the battery (24) comprising at least an outer surface (24e), and
- two supports (37), each support (37) being fastened against the first inner surface (9ai) of the first wall (9a) of the box (9), by means of at least one fastening element (38), and each support (37) holding the battery (24) in position inside the box (9),
each support (37) comprising at least:
- a first arm (41), the first arm (41) comprising at least a first surface (41a), the first surface (41a) being brought to bear against the first inner surface (9ai) of the first wall (9a) of the box (9), and
- a second arm (42), the second arm (42) being connected to the first arm (41), the second arm (42) comprising at least a second surface (42a), the second surface (42a) being brought to bear against the outer surface (24e) of the battery (24), the second surface (42a) being curved,
**characterized**
**in that** the second arm (42) of each support (37) is arranged between the battery (24) and the screen (2),
and **in that** the battery (24) is held in abutment against the first inner surface (9ai) of the first wall (9a) of the box (9) and against the second inner surface (9bi) of the second wall (9b) of the box (9), by means of the second surface (42a) of the second arm (42) of each support (37).

2. The screening device (3) according to claim 1, **characterized in that** the battery (24) is cylindrical.

3. The screening device (3) according to claim 1 or according to claim 2, **characterized in that** each support (37) is made of a plastic material.

4. The screening device (3) according to any one of claims 1 to 3, **characterized in that** the element (38) for fastening each support (37) against the first wall (9a) of the box (9) is an element for fastening by gluing.

5. The screening device (3) according to any one of claims 1 to 4, **characterized in that** the element for fastening each support (37) against the first wall (9a) of the box (9) is an element for fastening by screwing or riveting.

6. The screening device (3) according to any one of claims 1 to 5, **characterized in that** the second wall (9b) is orthogonal to the first wall (9a) of the box (9).

7. The screening device (3) according to any one of claims 1 to 6, **characterized in that** the second arm (42) of each support (37) further comprises a third surface (42b), the third surface (42b) being opposite the second surface (42a).

8. The screening device (3) according to any one of claims 1 to 7, **characterized in that** each support (37) further comprises at least one stiffening element (45), the stiffening element (45) connecting the first arm (41) to the second arm (42).

9. The screening device (3) according to any one of claims 1 to 8, **characterized in that** the screening device (3) further comprises at least one motorized driving device (5),
**in that** the motorized driving device (5) comprises at least one electromechanical actuator (11),
**in that** the electromechanical actuator (11) comprises at least one electric motor (16), the electric motor (16) being supplied with electrical energy from the battery (24),
and **in that** the winding tube (4) is arranged to be rotated by the electromechanical actuator (11).

10. The screening device (3) according to any one of claims 1 to 9, **characterized in that** the screening device (3) further comprises at least one photovoltaic panel (25), the battery (24) being supplied with electrical energy by means of the photovoltaic panel (25).
